# EUROPEAN PATENT SPECIFICATION

(11) **EP 2 850 927 B1**
(45) Date of publication and mention of the grant of the patent: **09.03.2016**
(21) Application number: 14185429.9
(22) Date of filing: 18.09.2014
(51) Int. Cl.: A01C 3/00, C05F 3/06, C02F 11/16, F26B 3/28, F26B 9/06, F26B 9/08, F26B 11/14, F26B 11/22, F26B 25/00, C02F 103/20

(54) **Perfected animal manure drying facility**
Verbesserte Tierdungtrocknungsanlage
Installation de séchage de fumier animal perfectionné

(30) Priority: 19.09.2013 ES 201331364
(43) Date of publication of application: 25.03.2015
(73) Proprietor: Test Positive, S.L, 08008 Barcelona (ES)
(72) Inventor: Salinas Ijurco, Imanol, 08008 Barcelona (ES)
(74) Representative: Isern-Jara, Nuria

(56) References cited:
- EP-A1- 1 464 628
- WO-A1-2005/019751
- DE-A1- 10 164 546
- DE-A1- 19 851 793
- FR-A1- 2 789 163

## Description

### SUBJECT MATTER OF THE INVENTION

The object of the present Invention Patent application is to register a perfected animal manure drying facility, which incorporates notable innovations and advantages over the techniques used to date.

More specifically, the invention proposes the development of a perfected animal manure drying facility that, due to its particular arrangement, allows for effective drying of the excrement of farm animals, in particular poultry, in a simple and inexpensive manner.

### BACKGROUND OF THE INVENTION

Various types of facilities are known in the current state of the art for drying the droppings of animals in breeding centers, mainly in hen farms, both those for laying and for breeding.

Due to the fact that they contain a high percentage of water, animal droppings have traditionally been a difficult and onerous product to handle. For this reason, various solutions have been proposed for the purpose of obtaining a dehydrated product that is easy to handle and low-odor, and which may be used in subsequent applications. Because of its composition, poultry excrement constitutes a highly valued fertilizer for the agricultural sector.

In order to dry these droppings, the most elementary process consists of blowing air over the droppings in the poultry housing itself, which is usually made up of batteries of cages fitted with conveyor belts onto which the excrement falls, and which serve to remove the same. However, this method does not manage to dry out the droppings down to the percentage of dry matter that would be desirable, since it would be necessary to move large quantities of air in order to achieve this, which could have a harmful effect on the birds' comfort.

Other systems are also known in the state of the art, which employ drying tunnels that are annexed onto the poultry housing buildings. Inside these tunnels conveyor belts are housed at different levels. The air coming from the hen houses is made to pass through these belts, which have perforations all along their length, to reduce the dampness of the chicken droppings down to the desired degree.

However, this system exhibits several drawbacks, as it is configured to have lateral ventilation of the warehouse in order to make the air pass through the belts, eliminating the possibility of having "tunnel"-type ventilation, which is often the best one in terms of economy and results.

Moreover, it generates odor and attracts insects to the vicinity of the buildings housing the poultry, thus worsening the living conditions of both the latter and their caretakers. Because they are a series of conveyor belts placed one above the other at a short vertical distance, and loaded with chicken droppings, repair in cases of breakdown is quite onerous for the workers in charge of the same.

Other solutions known in the current state of the art refer to an area for drying droppings having a permeable base.

In these facilities, the moist chicken droppings are mixed with a quantity of dry chicken droppings obtained beforehand, in worm screw transport systems, and are then distributed over a base that is permeable to the passage of air, using conveyor belts and worm screw. Air is blown in from the hen houses through the layer of chicken droppings, and by means of a scraper built into the permeable base, the dry portion of the mixture is dropped down to the lower part, from where it is taken out with a scraping shovel to be mixed with new fresh chicken droppings or to be stored.

The performance of this facility is functionally satisfactory, but nevertheless it exhibits several drawbacks. The system of scraping through the permeable base is enclosed within said base, such that it is very difficult to maintain and inspect, and is an inflexible system that necessarily requires that the lower portion of the bed of chicken droppings fall along the entire length of the dryer, regardless of its degree of dehydration.

The feeding system by means of worm screws requires high-power motors, thus negatively effecting energy consumption, and furthermore is a system that is prone to frequent blockage, necessitating onerous labor-intensive tasks which entail loss of drying cycles while being carried out.

The distribution system by means of a worm screw requires that the mechanisms be in contact with the layer of chicken droppings, which can lead to blockage in the transfer movement of the distribution cart as it moves backwards.

This system is costly in terms of energy, and furthermore is inflexible, as it requires the entire length of the dryer to be covered with chicken droppings in order to function properly. If it is not possible to achieve this with chicken droppings from the chicken houses, a larger portion of previously dehydrated chicken droppings must be employed, which is costly in terms of energy in addition to being unnecessary, and has the undesired effect of creating a dustier atmosphere in the dryer.

The actuators used for the movements of the mechanisms are liable to break down and are maintenance-intensive. They demand that the actuation wires be continually changed out at relatively short time intervals, and do not provide desirable precision in the positioning of the mechanisms, especially the scraper shovel in the lower chamber.

In particularly long machines, the scraper shovel in the lower chamber has to make a great number of trips on empty, wherein due to the time passed between going to get material and returning, the removal pit is emptied out. This makes it necessary to either stop all of the motors of the means of conveyance to the building for storing the processed product, or keep said motors operating without conveying any material. Both of these options are costly in terms of energy and undesirable because of the premature wear to the machinery.

There is no effective system for monitoring the degree of dehydration of the material, and as a result it is possible to be using ventilation powers that are higher than necessary, which constitutes a very significant energy cost. The facility furthermore requires the construction of a building in which to be implemented, thus increasing its cost. This building, in turn, requires ventilation openings, where undesirable condensation of the vapor from the treated product may occur.

The patent application publication FR 2 789 163 A1 discloses an animal manure drying facility according to the preamble of claim 1.

The present invention helps solve and overcome the present set of problems, as it proposes a facility that does not exhibit the foregoing drawbacks, has a simple design, is easy to maintain, easy to implement, takes full advantage of the ventilation air of the chicken houses, and has a low cost, as it uses the minimum energy strictly necessary, adapted to the desired degree of dehydration.

### DESCRIPTION OF THE INVENTION

The present invention has been developed with the aim of providing a perfected animal manure drying facility according to claim 1.

Preferably, in the perfected animal manure drying facility, the sifting means comprise a plurality of cross beams arranged in staggered formation and longitudinally on various horizontal planes, the cross beams of each one of the horizontal planes overlapping, and there being holes in the cross beams which have the ability to let air pass through them.

Likewise, in the perfected animal manure drying facility, the upper cart can move longitudinally over the length of the upper chamber by means of wheels and rails situated in said upper chamber, and the lower cart can move longitudinally over the length of the lower chamber by means of wheels and rails situated in said lower chamber.

In addition, in the perfected animal manure drying facility, the air supply means comprise fans positioned in the lower chamber.

Moreover, the perfected animal manure drying facility comprises weighing means for weighing the material deposited on the sifting means, said weighing means comprising a system of scales placed underneath the sifting means.

In addition, in the perfected animal manure drying facility, the distribution means comprise an oscillating conveyor belt and a box, the oscillating belt being connected and positioned on the upper part of the upper cart, and the box being positioned at one end of the oscillating belt, and the oscillating belt rotating in a cyclical manner contained within a horizontal plane and maintaining its horizontal orientation and leveling, and the vertical projection of the box sitting outside the horizontal breadth of the upper cart.

Preferably, in the perfected animal manure drying facility, the mixing and leveling means comprise a system of hooks that are positioned on the lower part of the upper cart and can fold to the upper cart itself.

Likewise, in the perfected animal manure drying facility, the displacement means comprise a system of posts that are positioned on the lower part of the upper cart and can fold to the upper cart itself.

Moreover, in the perfected animal manure drying facility, the dragging means comprise rakes that are positioned on the lower part of the lower cart.

Also, in the perfected animal manure drying facility, the receiving means comprise a system of conveyor belts that are separate from the upper cart.

In addition, in the perfected animal manure drying facility, the removal means comprise a system of conveyor belts that are separate from the lower cart.

The present invention offers a facility that has a simple design, and is easy to maintain and implement, as there are no hard-to-reach mechanisms and no wires, and its movements are carried out with rack and pinion mechanisms, such that there is no possibility of the drive mechanisms slipping, thus making it easier to perform maintenance tasks and fix breakdowns.

The various mechanisms are not in permanent contact with the material, making it easy to maintain them and to change out parts as needed when subjected to natural wear through use, in the area of the facility set up for this purpose.

Full advantage is taken of the ventilation air and at a low cost, as it uses the minimum energy strictly necessary to dehydrate the product, adapted to the desired degree of dehydration.

Other characteristics and advantages of the perfected animal manure drying facility will become clear in light of the description of a preferred, though non-exclusive, embodiment, which, by way of a non-limiting example, is illustrated in the accompanying drawings, wherein:

### BRIEF DESCRIPTION OF THE DRAWINGS

Figure 1.- Is a schematic elevation view of a preferred embodiment of the perfected animal manure drying facility of the present invention.
Figure 2.- Is a schematic view of a cross-section of a preferred embodiment of the perfected animal manure drying facility of the present invention represented in figure 1.
Figure 3.- is a schematic plan view of a preferred embodiment of the perfected animal manure drying facility of the present invention represented in figure 1.
Figure 4.- Is a schematic elevation view of a preferred embodiment of the perfected animal manure drying facility of the present invention that is similar to that of figure 1 but equipped with multiple removal pits.
Figures 5a and 5b.- Are schematic views of a preferred embodiment of the perfected animal manure drying facility of the present invention, showing the distribution means of the upper cart of the upper chamber.
Figures 6a, 6b and 6c.- Are schematic views of a preferred embodiment of the perfected animal manure drying facility of the present invention, showing the mixing and leveling means of the upper cart of the upper chamber.
Figures 7a, 7b and 7c.- Are schematic views of a preferred embodiment of the perfected animal manure drying facility of the present invention, showing the displacement means of the upper cart of the upper chamber.
Figure 8.- Is a schematic cross-section view of a preferred embodiment of the perfected animal manure drying facility of the present invention represented in figure 1, showing the weighing means for weighing the mixture to be treated.

### DESCRIPTION OF A PREFERRED EMBODIMENT

As shown in the figures, the perfected animal manure drying facility that is suitable for drying farm animal excrement and/or manure, adapted for the drying treatment of a previously prepared mixture 3 of fresh manure and previously dried manure, comprises an upper chamber 1 and a lower chamber 2 that are perceptibly longitudinal and placed one on top of the other, sifting means that are permeable to the passage of air therethrough and are positioned between the two chambers 1, 2, acting as a separation between the latter, and are arranged for the mixture 3 of manure to be treated to be deposited thereupon, an upper cart 5 that can move about the upper chamber 1 and a lower cart 6 that can move about the lower chamber 2, air supply means arranged to circulate air through the sifting means, mixing means for mixing fresh manure and previously dried manure, receiving means for receiving the mixture 3 of manure to be treated and removal means for removing the mixture 3 of treated manure; the upper cart 5 being equipped with distribution means arranged to distribute the mixture 3 to be treated over the sifting means, equipped with mixing and leveling means arranged to make the mixture 3 of manure to be treated permeable to the passage of air when it is distributed over the sifting means, and also equipped with displacement means arranged to dump the mixture 3 from the sifting means down to the lower chamber 2; the lower cart 6 being equipped with dragging means arranged to move the dumped mixture 3 coming from the sifting means from the lower chamber 2 to the removal means.

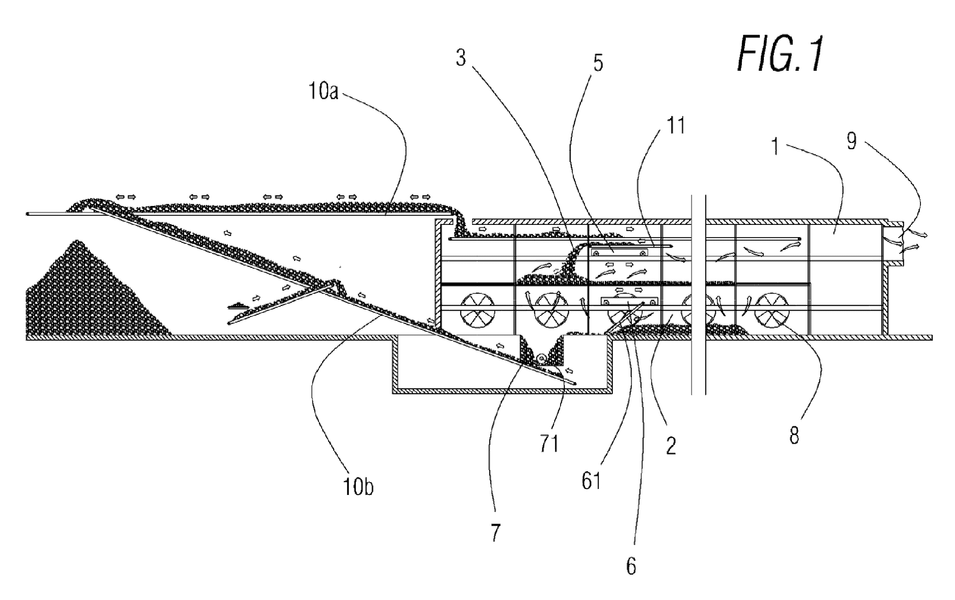

As schematically represented in figures 1, 2 and 3, the invention consists of one upper chamber 1 and another lower chamber 2 that are longitudinal, and placed one on top of the other.

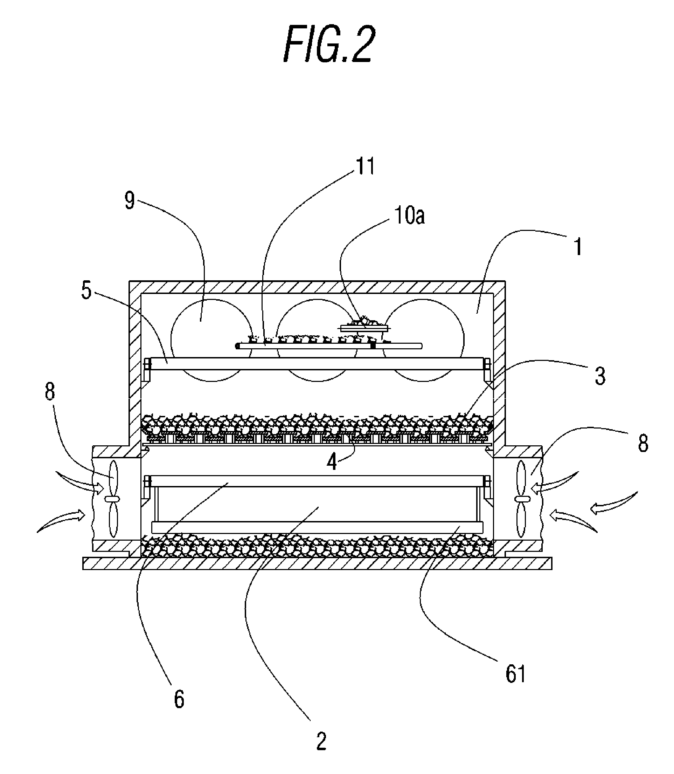

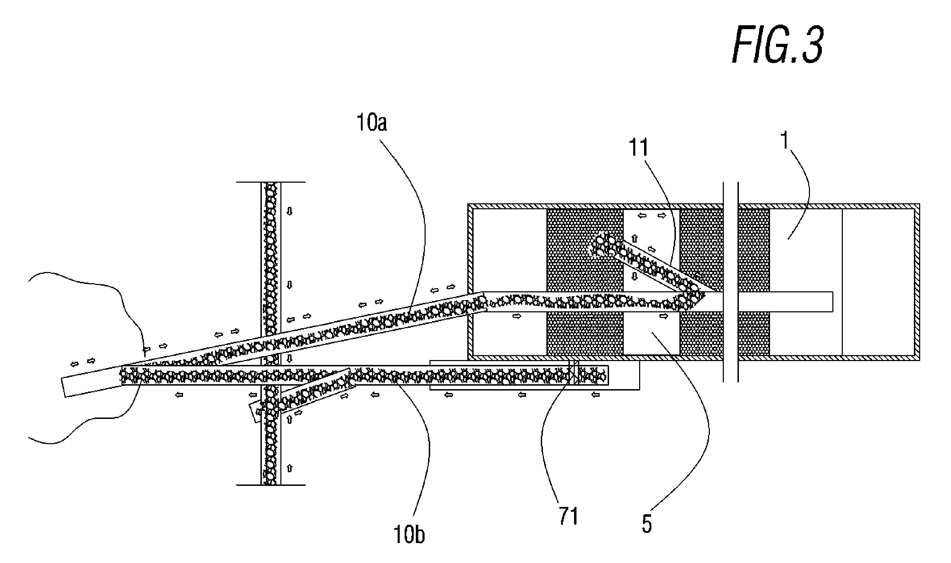

Figure 1 represents a schematic elevation view of a preferred embodiment of the perfected animal manure drying facility of the present invention, figure 2 is a schematic view of a cross-section of the representation of figure 1, and figure 3 is a schematic plan view of the representation of figure 1.

Between the upper and lower chambers 1, 2 there are sifting means. These sifting means are permeable to the passage of air and act as separators between the two chambers 1, 2, and are arranged for the mixture 3 of manure to be treated to be deposited thereupon.

In this preferred embodiment, the sifting means comprise a plurality of cross beams 4 arranged in staggered formation, as may be seen more clearly in figure 2, positioned longitudinally on two, three or more horizontal planes, the cross beams 4 of each one of the horizontal planes overlapping, without any vertical continuity between them.

In the lower chamber 2, air at a pressure higher than atmospheric pressure is blown in by means of air supply means.

In this preferred embodiment, the air supply means are embodied as high-pressure fans 8 positioned in walls of the lower chamber 2. The air that is blown in then exits through the upper chamber 1, out the openings 9, as will be explained further on.

These upper and lower chambers 1, 2 are built out of suitable materials that are insulating and sturdy, in order to withstand the pressure of the air used and to prevent any condensation.

There are holes in the cross beams 4 which have the ability to let the air pass through them. The longitudinal directrix of the cross beams 4 coincides with the longitudinal arrangement of the upper and lower chambers 1, 2.

Receiving means gather the mixture 3 of manure to be treated and put it into the upper chamber 1 for it to be treated and dried, and removal means remove the treated and dried mixture 3 from the lower chamber 2.

In this preferred embodiment, the receiving means and the removal means are embodied as a system of conveyor belts 10a, 10b, of the sort commonly known in the state of the art. In the upper chamber 1 there is an upper cart 5, and in the lower chamber 2 there is another lower cart 6. These upper 5 and lower carts 6 can move about the inside of the upper and lower chambers 1, 2, respectively, along the longitudinal dimension thereof.

The upper cart 5 moves over the length of the upper chamber 1 by means of small-sized wheels and rails in said upper chamber 1.

The lower cart 6 moves over the length of the lower chamber 2 by means of small-sized wheels and rails in said lower chamber 2.

In this preferred embodiment, the wheels engage with the rails thus preventing any slipping thereof.

The upper cart 5 distributes and spreads out the mixture 3 of manure to be treated over the sifting means, mixes and levels it, and displaces the driest portion of the mixture 3.

The lower cart 6 is responsible for dragging and moving the dry mixture 3 deposited on the base of the lower chamber 2 over to the removal pit 7.

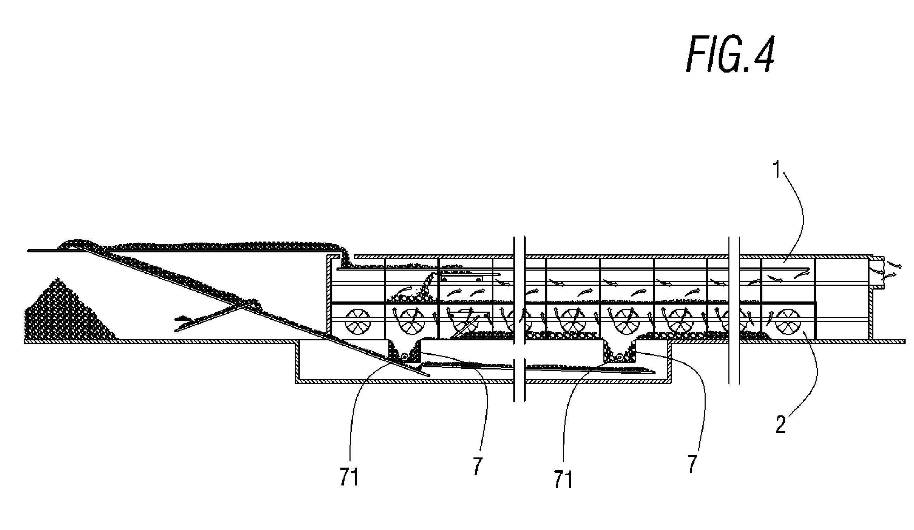

In particularly long facilities, several removal pits 7 may be built to prevent having to stop the conveyor belt circuit, as is schematically represented in figure 4.

In order to carry out its aforementioned functions, the upper cart 5 is equipped with distribution means, mixing and leveling means, and displacement means, and the lower cart 6 is equipped with dragging means.

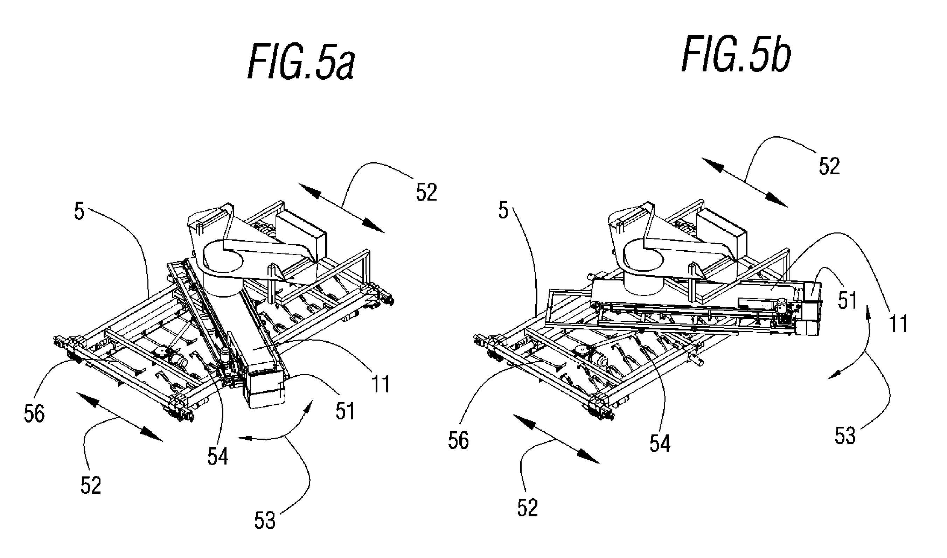

In a preferred embodiment, as represented in figures 5a and 5b, the distribution means comprise an oscillating conveyor belt 11 that leads to a box 51 that is at one end of said oscillating belt 11. The oscillating belt 11 rotates cyclically and is contained within a horizontal plane and maintains its horizontal orientation and leveling, and the vertical projection of the box 51 sits outside the horizontal breadth of the upper cart 5.

The upper cart 5 moves in the direction indicated by the arrows 52 over the length of the upper chamber 1, and the oscillating belt 11 in turn moves cyclically, contained within a horizontal plane, such that the box 51 carries out the movement represented by the arrows 53. The mixture 3 of manure coming from the receiving means reaches the oscillating belt 11, and is transported to the box 51, through which it falls. The movement of the upper cart 5, represented by the arrows 52, and of the oscillating belt 11 and the box 51, represented by the arrows 53, make it so that the mixture 3 of manure ends up being distributed uniformly over the length of the cross beams 4 as it falls from the box 51.

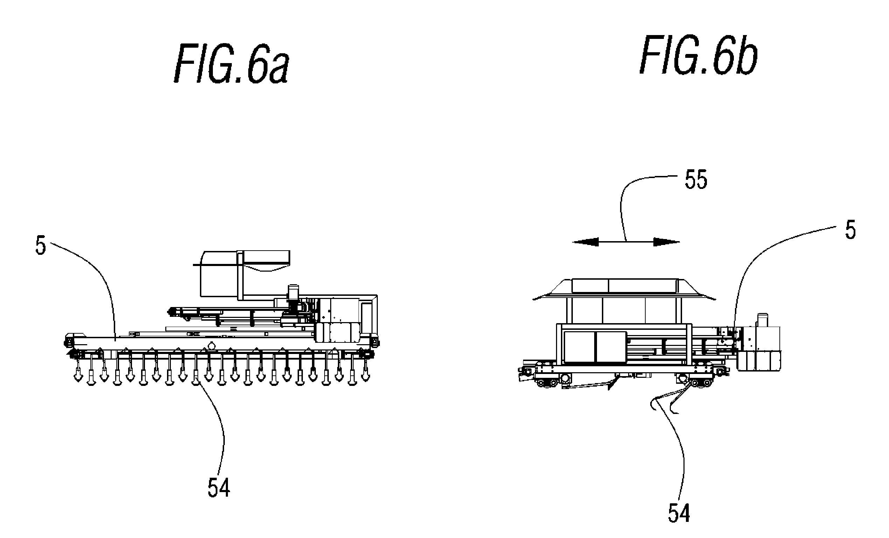

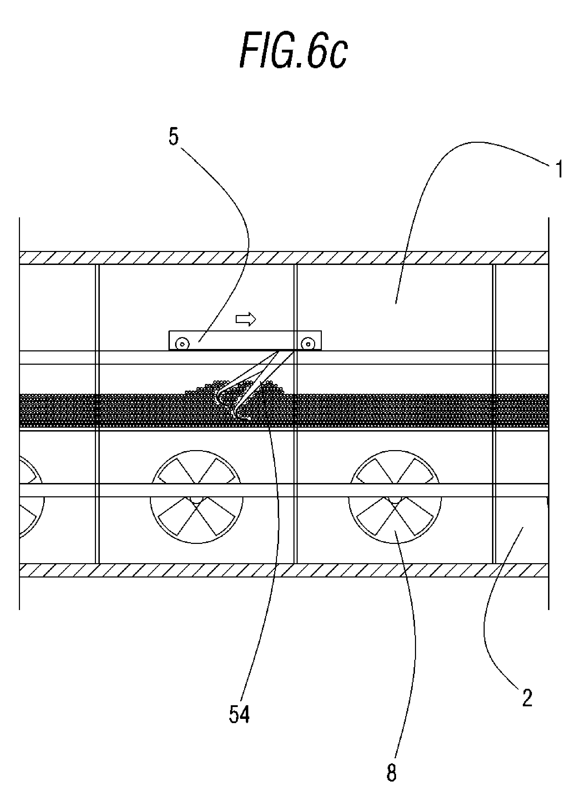

Figures 6a, 6b and 6c represent a preferred embodiment of the mixing and leveling means, which comprise a system of hooks 54, which are folded up in figures 5a and 5b.

Figure 6a represents a front view of the upper cart 5 from the direction of its forward movement through the upper chamber 1. Figure 6b represents a side view of the same upper cart 5, showing its direction of movement along arrow 55 over the length of the upper chamber 1.

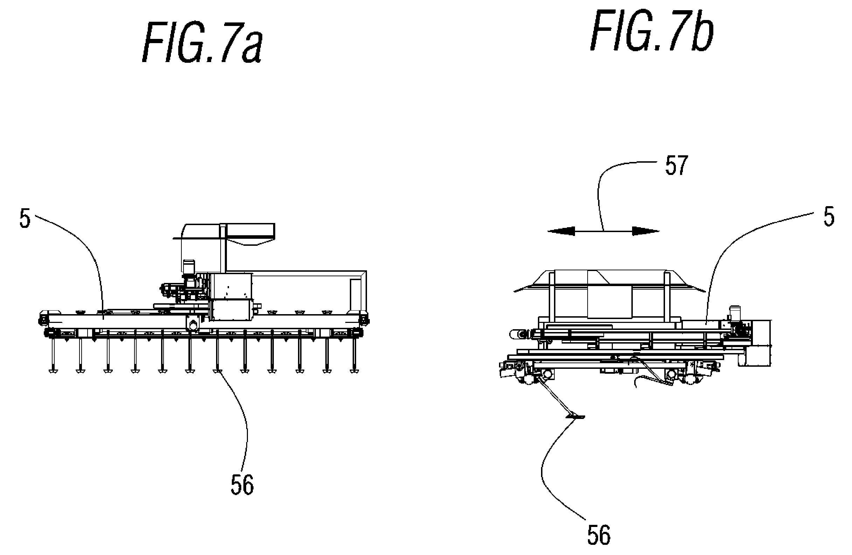

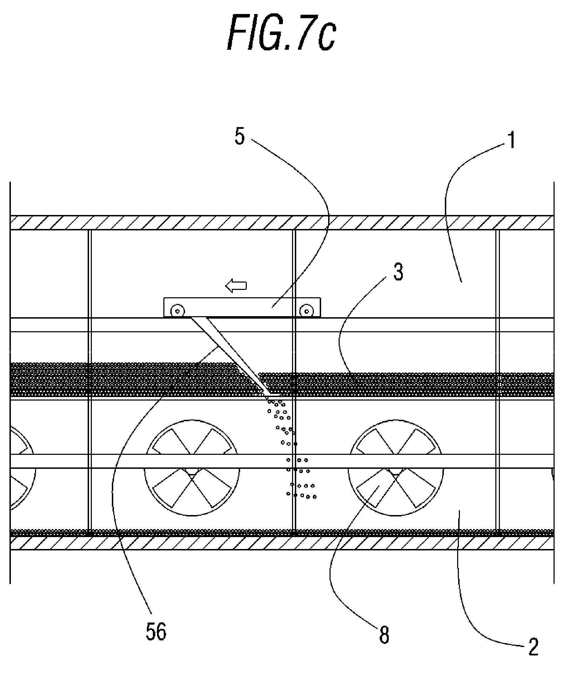

Figures 7a, 7b and 7c schematically represent a preferred embodiment of the displacement means, which comprise a system of posts 56, and which are also folded up in figures 5a and 5b.

Figure 7a represents a front view of the upper cart 5 from the direction of its forward movement through the upper chamber 1. Figure 7b represents a side view of the same upper cart 5, showing its direction of movement along arrow 57 over the length of the upper chamber 1.

The dragging means of the lower cart 6 comprise rakes 61, represented in figures 1 and 2.

For the perfected animal manure drying facility of the present invention to function properly, it is necessary to previously mix together a mixture 3 of the fresh untreated manure with dried manure previously obtained in a prior drying process.

This mixture 3 is made previously by means of manure mixing means, which comprise a system of conveyor belts of the sort commonly known in the current state of the art and not presented in detail in the present explanation, which make the mixture 3 in a suitable ratio, which depends on parameters such as temperature, the degree of moisture of the fresh material, the degree of moisture of the processed and obtained material, etc. What is obtained is a mixture 3 made up of a portion of wet product and processed, dehydrated product, in a suitable ratio, adjusting the various parameters in order to obtain the maximum dehydration possible.

In this preferred embodiment, the manure mixing means comprise conveyor belts (10a, 10b) that are also used in the receiving means and removal means, in order to thus mix a given portion of dried manure together with the fresh manure to be treated, and thus obtain a mixture 3 of fresh manure and of previously dried manure, which the perfected animal manure drying facility of the invention then dries.

Subsequently, the obtained mixture 3 is dumped, by means of the system of conveyor belts 10a of the receiving means, onto the distribution means of the upper cart 5, which in this preferred embodiment comprise an oscillating conveyor belt 11 and a box 51, as has already been mentioned.

The distribution means go about depositing a layer of the mixture 3 on the sifting means (in this preferred embodiment the cross beams 4) located in the base of the upper chamber 1, and which separate it from the lower chamber 2.

The distribution means allow for the height of the mixture 3 load to be variable and controlled using the speed of the cyclical movement of the oscillating belt 11 and the speed of the movement of the upper cart 5. The height of this layer may vary over the length of the cross beams 4.

Once the mixture 3 has been deposited on the cross beams 4, air is made to circulate by means of fans 8, at the pressure needed in order to overcome the pressure drop caused by passing through the mixture 3 deposited upon the cross beams 4, and the passage of air goes about drying the mixture 3.

The air exiting through the upper chamber 1 out the openings 9 is practically saturated, as it has absorbed the moisture of the mixture 3 through the cross beams 4.

The upper cart 5 continues to make successive trips over the cross beams 4 in order to dump out more mixture 3 with the distribution means (in this preferred embodiment with the oscillating belt 11 and the box 51).

Another effect of the successive trips of the upper cart 5 is that, using the displacement means (in this preferred embodiment the system of posts 56), the dried portion of the mixture 3 is dumped into the lower chamber 2, and subsequently, as the mixing and leveling means pass (in this preferred embodiment the system of hooks 54) the layer of mixture 3 that remains deposited upon the cross beams 4 is evened out, in order to help the air supplied by the fans 8 to pass therethrough, as is schematically represented in figure 6c.

This number of successive and cyclical trips may be determined by means of repeated weighing of the material deposited on the sifting means (the cross beams 4), as well as by measuring the thickness of the deposited layer of mixture 3, using weighing means for weighing the material deposited upon the cross beams 4, and a system for measuring said thickness (not presented in detail in the present explanation since it is of the sort already known in the state of the art). It is therefore possible to determine, based on the weight and thickness, the amount of water released and therefore the number of cycles needed, the space of time between them, the speed of the cyclical movement of the oscillating belt 11, the speed of the upper cart 5 and the operating time of the fans 8.

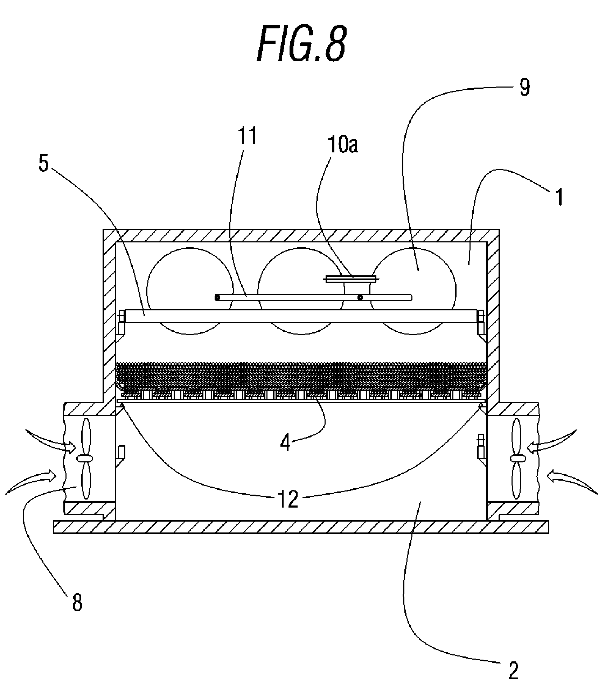

In this preferred embodiment, the weighing means are embodied by a system of scales 12 placed underneath the cross beams 4, as schematically represented in figure 8.

Over the successive trips of the upper cart 5, with the fans 8 operating, the system of posts 56 causes the driest portion of the mixture 3 that is on the cross beams 4 to be dumped into the lower chamber 2, as is schematically represented in figure 7c.

This process is repeated continually as the mixture 3 is dried, thus depositing a layer of dried mixture 3 in the lower chamber 2 that grows thicker and thicker.

Once the dried mixture 3 has been deposited on the base of the lower chamber 2, the dragging means (in this preferred embodiment, rakes 61) of the lower cart 6 take successive trips to drag the dry mixture 3 over to where they deposit it in a removal pit 7 (or several removal pits 7, as represented in figure 4). It is then transferred by means of a worm shaft 71 over to the system of conveyor belts 10b of the removal system, which take the treated mixture 3 outside so that it may be stored in facilities built for this purpose.

The cross beams 4 that separate the two chambers 1, 2 do not enclose any sort of mechanisms, thus making the facility a great deal simpler.

None of the mechanisms in the upper 5 or lower carts 6 are in direct contact with the chicken droppings, and the height of the layer of mixture 3 that is placed upon the permeable cross beams 4 may be variable, thus allowing for much needed flexibility in the amount of mixture 3 to be loaded, since the nature of this mixture 3, and therefore the density thereof, varies a great deal.

It is possible to make the load of the mixture 3 in two or more layers, it only being necessary to fill the first layer over the entire length of the facility. It is also possible to empty out the dry portion selectively, placing more emphasis on the sections with a greater number of layers.

The ability to activate the air supply means and the displacement means at will also enables a greater degree of flexibility in the use of the facility, making it possible to use its entire area or a part thereof, with the sole condition that the sifting means in the unused part must be covered with material in order to keep air from passing through the unused area.

Once the desired dryness value has been reached, the fans 8 automatically stop, thus optimizing the use of the facility and reducing energy costs.

The facility may be built with more capacity than that which is strictly necessary, without worrying about having to complete the entire length thereof with a greater supply of dry material.

Giving the facility extra capacity is a good idea in order to face unforeseen situations. In this way, filling by layers makes it possible to process seven days of waste in six, for example. Moreover, a portion of the facility may be set aside as a storage area, for example.

The facility provides the user with the necessary flexibility in use, without reducing efficiency in terms of taking advantage of the ventilation of the livestock housing.

The mechanisms are not in permanent contact with the material, making it easy to maintain them and to change out parts as needed when subjected to natural wear through use, in the area of the facility set up for this purpose.

There are no hard-to-reach mechanisms. There are no wires, the upper 5 and lower carts 6 move with rack and pinion mechanisms, and there is no possibility of the drive mechanisms slipping. Since the main mechanisms that take part in the critical treatment stages are concentrated in the upper cart 6, it is easier to perform maintenance tasks and fix breakdowns.

The heavy-duty drive mechanisms of the upper 5 and lower carts 6 position the latter with precision and with the necessary drive and breaking forces.

The fact that the facility is built with insulating materials prevents the formation of condensation inside and of thermal bridges. It is not necessary to construct a building to house the facility, which reduces the cost significantly.

The use of closed belt conveyor systems offers mechanical reliability, easy use and maintenance, suitable containment of the dusty environment and lower energy consumption.

The details, shapes, dimensions and other accessory elements, as well as the materials used to manufacture the perfected animal manure drying facility of the invention, may be suitably substituted for others which are technically equivalent, and do not diverge from the essential nature of the invention, nor the scope defined by the claims included below.

## Claims

1. A perfected animal manure drying facility that is suitable for drying farm animal excrement and/or manure, adapted for the drying treatment of a previously prepared mixture (3) of fresh manure and previously dried manure, comprising an upper chamber (1) and a lower chamber (2) that are perceptibly longitudinal and placed one on top of the other, sifting means that are permeable to the passage of air therethrough and are positioned between the two chambers (1, 2), acting as a separation between the latter, and are arranged for the mixture (3) of manure to be treated to be deposited thereupon, an upper cart (5) that can move about the upper chamber (1) and a lower cart (6) that can move about the lower chamber (2), air supply means (8) arranged to circulate air through the sifting means, mixing means for mixing fresh manure and previously dried manure, receiving means (10a) for receiving the mixture (3) of manure to be treated and removal means for removing the mixture (3) of treated manure; the upper cart (5) being equipped with distribution means (11, 51) arranged to distribute the mixture (3) to be treated over the sifting means, equipped with mixing and leveling means (54) arranged to make the mixture (3) of manure to be treated permeable to the passage of air when it is distributed over the sifting means; the lower cart (6) being equipped with dragging means (61) arranged to move the dumped mixture (3) coming from the sifting means from the lower chamber (2) to the removal means;
**characterised in that** the upper cart being also equipped with displacement means (56) arranged to dump the mixture (3) from the sifting means down to the lower chamber (2).

2. The perfected animal manure drying facility according to the preceding claim, **characterized in that** the sifting means comprise a plurality of cross beams (4) arranged in staggered formation and longitudinally on various horizontal planes, the cross beams (4) of each one of the horizontal planes overlapping, and there being holes in the cross beams (4) which have the ability to let air pass through them.

3. The perfected animal manure drying facility according to claim 1, **characterized in that** the upper cart (5) can move longitudinally over the length of the upper chamber (1) by means of wheels and rails situated in said upper chamber (1), and the lower cart (6) can move longitudinally over the length of the lower chamber (2) by means of wheels and rails situated in said lower chamber (2).

4. The perfected animal manure drying facility according to claim 1, **characterized in that** the air supply means comprise fans (8) positioned in the lower chamber (2).

5. The perfected animal manure drying facility according to claim 1, **characterized in that** it comprises weighing means for weighing the material deposited on the sifting means, said weighing means comprising a system of scales (12) placed underneath the sifting means.

6. The perfected animal manure drying facility according to claim 1, **characterized in that** the distribution means comprise an oscillating conveyor belt (11) and a box (51), the oscillating belt (11) being connected and positioned on the upper part of the upper cart (5), and the box (51) being positioned at one end of the oscillating belt (11), and the oscillating belt (11) rotating in a cyclical manner contained within a horizontal plane and maintaining its horizontal orientation and leveling, and the vertical projection of the box (51) sitting outside the horizontal breadth of the upper cart (5).

7. The perfected animal manure drying facility according to claim 1, **characterized in that** the mixing and leveling means comprise a system of hooks (54) that are positioned on the lower part of the upper cart (5) and can fold to the upper cart (5) itself.

8. The perfected animal manure drying facility according to claim 1, **characterized in that** the displacement means comprise a system of posts (56) that are positioned on the lower part of the upper cart (5) and can fold to the upper cart itself (5).

9. The perfected animal manure drying facility according to claim 1, **characterized in that** the dragging means comprise rakes (61) that are positioned on the lower part of the lower cart (6).

10. The perfected animal manure drying facility according to claim 1, **characterized in that** the receiving means comprise a system of conveyor belts (10a) that are separate from the upper cart (5).

11. The perfected animal manure drying facility according to claim 1, **characterized in that** the removal means comprise a system of conveyor belts (10b) that are separate from the lower cart (6).

## Patentansprüche

1. Ausgereifte Tierdung-Trocknungsanlage, die für die Trocknung von Nutztier-Exkrementen und/oder Dung geeignet ist, adaptiert für die Trocknungsbehandlung einer vorher zubereiteten Mischung (3) von frischem Dung und vorher getrocknetem Dung, umfassend eine obere Kammer (1) und eine untere Kammer (2), die merklich längslaufend sind und übereinandergestellt sind, Siebungseinrichtung, die für die Luftdurchfuhr dort hindurch durchlässig ist und zwischen den beiden Kammern (1, 2) positioniert ist und dabei als eine Trennung zwischen den Letzteren fungiert, und die für die Mischung (3) des zu behandelnden Dungs, um darauf abgelagert zu werden, angeordnet ist, einen oberen Wagen (5), der sich über die obere Kammer (1) bewegen kann und einen unteren Wagen (6), der sich über die untere Kammer (2) bewegen kann, Luftzufuhreinrichtung (8), die angeordnet ist, um Luft durch die Siebungseinrichtung zirkulieren zu lassen, Mischeinrichtung zum Mischen von frischem Dung und vorher getrocknetem Dung, Aufnahmeeinrichtung (10a) zur Aufnahme der Mischung (3) des zu behandelnden Dungs und Entfernungseinrichtung zur Entfernung der Mischung (3) des behandelten Dungs; der obere Wagen (5) ist dabei mit einer Verteilungseinrichtung (11, 51) ausgestattet, angeordnet, um die zu behandelnde Mischung (3) über die Siebungseinrichtung zu verteilen, ausgestattet mit einer Mischungs- und Nivellierungeinrichtung (54), die angeordnet ist, um die Mischung (3) des zu behandelnden Dungs herzustellen, durchlässig für die Luftdurchfuhr, wenn er über die Siebungseinrichtung verteilt wird; der untere Wagen (6), ausgestattet mit einer Zieheinrichtung (61), die angeordnet ist, um die abgeladene Mischung (3), die von der Siebungseinrichtung kommt, von der unteren Kammer (2) zu der Entfernungseinrichtung zu bewegen; **dadurch gekennzeichnet, dass** der obere Wagen auch mit einer Verschiebungseinrichtung ausgestattet ist, um die Mischung (3) von der Siebungseinrichtung nach unten zu der unteren Kammer (2) abzuladen.

2. Ausgereifte Tierdung-Trocknungsanlage nach dem vorhergehenden Anspruch, **dadurch gekennzeichnet, dass** die Siebungseinrichtung eine Vielzahl von Querträgern (4), die in einer versetzten Formation und der Länge nach an verschiedenen horizontalen Ebenen angeordnet sind, umfasst, wobei sich die Querträger (4) jeder der horizontalen Ebenen überlagern und Löcher in den Querträgern (4) sind, die die Fähigkeit haben, Luft durch sie hindurchzulassen.

3. Ausgereifte Tierdung-Trocknungsanlage nach Anspruch 1, **dadurch gekennzeichnet, dass** sich der obere Wagen (5) der Länge nach über die Länge der oberen Kammer (1) mit Hilfe von Rädern und Schienen, die sich an der oberen Kammer (1) befinden, bewegen kann, und der untere Wagen (6) sich der Länge nach über die Länge der unteren Kammer (2) mit Hilfe von Rädern und Schienen, die sich an der unteren Kammer (2) befinden, bewegen kann.

4. Ausgereifte Tierdung-Trocknungsanlage nach Anspruch 1, **dadurch gekennzeichnet, dass** die Luftzufuhreinrichtung Lüfter (8) umfasst, die an der unteren Kammer (2) angeordnet sind.

5. Ausgereifte Tierdung-Trocknungsanlage nach Anspruch 1, **dadurch gekennzeichnet, dass** sie eine Wiegeeinrichtung zum Wiegen des auf der Siebungseinrichtung abgelagerten Materials umfasst, wobei die Wiegeeinrichtung ein System von Skalen (12) umfasst, das an der Unterseite der Siebungseinrichtung angeordnet ist.

6. Ausgereifte Tierdung-Trocknungsanlage nach Anspruch 1, **dadurch gekennzeichnet, dass** die Verteilungseinrichtung ein Schwenkförderband (11) und einen Kasten (51) umfasst, wobei das Schwingband (11) an dem oberen Teil des oberen Wagens (5) angeschlossen und positioniert ist, und der Kasten (51) an einem Ende des Schwingbandes (11) positioniert ist, und das Schwingband dabei in einer zyklischen Weise innerhalb einer horizontalen Ebene rotiert und dabei seine horizontale Ausrichtung und Nivellierung beibehält, und die vertikale Projektion des Kastens (51) dabei außerhalb der horizontalen Breite des oberen Wagens (5) sitzt.

7. Ausgereifte Tierdung-Trocknungsanlage nach Anspruch 1, **dadurch gekennzeichnet, dass** die Mischungs- und Nivellierungseinrichtung ein System von Haken (54), die auf dem unteren Teil des oberen Wagens (5) positioniert sind und zum oberen Wagen (5) selbst umklappen können, umfasst.

8. Ausgereifte Tierdung-Trocknungsanlage nach Anspruch 1, **dadurch gekennzeichnet, dass** die Verschiebeeinrichtung ein System von Pfosten (56), die auf dem unteren Teil des oberen Wagens (5) positioniert sind und zum oberen Wagen selbst umklappen können, umfasst.

9. Ausgereifte Tierdung-Trocknungsanlage nach Anspruch 1, **dadurch gekennzeichnet, dass** die Zieheinrichtung Rechen (61), die auf dem unteren Teil des unteren Wagens (6) positioniert sind, umfasst.

10. Ausgereifte Tierdung-Trocknungsanlage nach Anspruch 1, **dadurch gekennzeichnet, dass** die Aufnahmeeinrichtung ein System von Förderbändern (10a), die von dem oberen Wagen (5) getrennt sind, umfasst.

11. Ausgereifte Tierdung-Trocknungsanlage nach Anspruch 1, **dadurch gekennzeichnet, dass** die Entfernungseinrichtung ein System von Förderbändern (10b), die von dem unteren Wagen (6) getrennt sind, umfasst.

## Revendications

1. Dispositif perfectionné de séchage de fumier d'animaux qui est apte à sécher les excréments et/ou le fumier d'animaux de ferme, adapté pour le traitement de séchage d'un mélange préalablement préparé (3) de fumier frais et de fumier préalablement séché, comprenant une chambre supérieure (1) et une chambre inférieure (2) qui sont perceptiblement longitudinales et placées l'une au-dessus de l'autre, des moyens de criblage qui sont perméables au passage de l'air à travers ces derniers et sont positionnés entre les deux chambres (1, 2), agissant comme une séparation entre ces dernières, et sont disposés de sorte que le mélange (3) de fumier à traiter soit déposé sur ces derniers, un chariot supérieur (5) qui peut se déplacer dans la chambre supérieure (1) et un chariot inférieur (6) qui peut se déplacer dans la chambre inférieure (2), des moyens d'alimentation en air (8) disposés pour faire circuler l'air à travers les moyens de criblage, des moyens de mélange pour mélanger du fumier frais et du fumier préalablement séché, des moyens de réception (10a) pour recevoir le mélange (3) de fumier à traiter et des moyens de retrait pour retirer le mélange (3) de fumier traité ; le chariot supérieur (5) étant équipé de moyens de répartition (11, 51) disposés pour répartir le mélange (3) à traiter sur les moyens de criblage, équipés de moyens de mélange et de nivelage (54) disposés pour rendre le mélange (3) de fumier à traiter perméable au passage de l'air lorsqu'il est réparti sur les moyens de criblage ; le chariot inférieur (6) étant équipé de moyens de trainement (61) disposés pour déplacer le mélange déversé (3) provenant des moyens de criblage depuis la chambre inférieure (2) aux moyens de retrait ; **caractérisé en ce que** le chariot supérieur sont aussi équipé de moyens de déplacement (56) disposés pour déverser le mélange (3) depuis les moyens de criblage jusqu'à la chambre inférieure (2).

2. Dispositif perfectionné de séchage de fumier d'animaux selon la revendication précédente, **caractérisé en ce que** les moyens de criblage comprennent une pluralité de traverses (4) disposées dans une configuration échelonnée et longitudinalement sur plusieurs plans horizontaux, les traverses (4) de chacun des plans horizontaux étant superposées, et des trous se trouvant dans les traverses (4) qui ont la capacité de laisser passer l'air à travers d'eux.

3. Dispositif perfectionné de séchage de fumier d'animaux selon la revendication 1, **caractérisé en ce que** le chariot supérieur (5) peut se déplacer longitudinalement sur la longueur de la chambre supérieure (1) au moyen de roues et de rails situés dans ladite chambre supérieure (1), et le chariot inférieur (6) peut se déplacer longitudinalement sur la longueur de la chambre inférieure (2) au moyen de roues et de rails situés dans ladite chambre inférieure (2).

4. Dispositif perfectionné de séchage de fumier d'animaux selon la revendication 1, **caractérisé en ce que** les moyens d'alimentation en air comprennent des ventilateurs (8) positionnés dans la chambre inférieure (2).

5. Dispositif perfectionné de séchage de fumier d'animaux selon la revendication 1, **caractérisé en ce qu'**il comprend des moyens de pesée pour peser la matière déposée sur les moyens de criblage, lesdits moyens de pesée comprenant un système de bascules (12) placées en dessous des moyens de criblage.

6. Dispositif perfectionné de séchage de fumier d'animaux selon la revendication 1, **caractérisé en ce que** les moyens de répartition comprennent une bande transporteuse oscillante (11) et un boîtier (51), la bande transporteuse (11) étant connectée et positionnée sur la partie supérieure du chariot supérieur (5), et le boîtier (51) étant positionné à une extrémité de la bande oscillante (11), et la bande oscillante (11) tournant de manière cyclique contenue dans un plan horizontal et maintenant son orientation et nivelage horizontaux, et la projection verticale du boîtier (51) étant à l'extérieur de la largeur horizontale du chariot supérieur (5).

7. Dispositif perfectionné de séchage de fumier d'animaux selon la revendication 1, **caractérisé en ce que** les moyens de mélange et de nivelage comprennent un système de crochets (54) qui sont positionnés sur la partie inférieure du chariot supérieur (5) et peuvent se rabattre sur le chariot supérieur (5) lui-même.

8. Dispositif perfectionné de séchage de fumier d'animaux selon la revendication 1, **caractérisé en ce que** les moyens de déplacement comprennent un système de piliers (56) qui sont positionnés sur la partie inférieure du chariot supérieur (5) et peuvent se rabattre sur le chariot supérieur (5) lui-même.

9. Dispositif perfectionné de séchage de fumier d'animaux selon la revendication 1, **caractérisé en ce que** les moyens de trainement comprennent des râteaux (61) qui sont positionnés sur la partie inférieure du chariot inférieur (6).

10. Dispositif perfectionné de séchage de fumier d'animaux selon la revendication 1, **caractérisé en ce que** les moyens de réception comprennent un système de bandes transporteuses (10a) qui sont séparées du chariot supérieur (5).

11. Dispositif perfectionné de séchage de fumier d'animaux selon la revendication 1, **caractérisé en ce que** les moyens de retrait comprennent un système de bandes transporteuses (10b) qui sont séparées du chariot inférieur (6).
